# EUROPÄISCHE PATENTSCHRIFT

(11) **EP 3 298 287 B1**
(45) Veröffentlichungstag und Bekanntmachung des Hinweises auf die Patenterteilung: **03.04.2019**
(21) Anmeldenummer: 16727638.5
(22) Anmeldetag: 16.05.2016
(51) Int. Cl.: F16B 5/06

(54) **ANORDNUNG UMFASSEND EIN FLÄCHIGES FORMTEIL**
ARRANGEMENT COMPRISING A FLAT MOULDED PART
AGENCEMENT COMPORTANT UNE PIÈCE MOULÉE PLATE

(30) Priorität: 22.05.2015 DE 102015108150
(43) Veröffentlichungstag der Anmeldung: 28.03.2018
(73) Patentinhaber: ElringKlinger AG, 72581 Dettingen/Erms (DE)
(72) Erfinder: SCHWARZENBERGER, Michael, 72581 Dettingen-Erms (DE); KOCH, Silvio, 72581 Dettingen-Erms (DE)
(74) Vertreter: Schmidt, Axel
(86) Internationale Anmeldenummer: PCT/EP2016/060944
(87) Internationale Veröffentlichungsnummer: WO 2016/188782

(56) Entgegenhaltungen:
- WO-A1-2009/043886
- US-A- 4 968 075
- US-A- 5 685 048

## Beschreibung

Die vorliegende Erfindung betrifft eine Anordnung umfassend ein flächiges Formteil aus einem thermoplastischen Material, das an oder mit mindestens einem anderen Bauteil durch rastende oder klemmende Fixierung des Elements in mindestens einer fluchtenden Öffnung des Formteils und des mindestens einen weiteren Bauteils anzuordnen ist.

US 4,968,075 A offenbart ein Fixierungsmittel, bei dem ein Befestigungselement ohne Beschädigung oder Zerstörung nicht mehr aus einer rastenden Fixierung einer Aufnahme gelöst werden kann. Dabei sind das Befestigungselement und die Aufnahme über eine Lasche als thermoplastischer Körper miteinander einstückig verbunden.

Aus dem Bereich der Fahrzeugtechnik und insbesondere der Personenkraftfahrzeugtechnik sind zahlreiche Lösungen zur Befestigung flächiger thermoplastischer Formteile und insbesondere von Abdeckungen und/oder Matten als Formteilen aus Silikonkautschuk an anderen Bauteilen bekannt. Zu diesen Lösungen zählen neben dem Kleben auch das Schrauben, Klammern oder Nieten sowie die Verwendung von Clips oder Stopfen. Nachteilig bei bekannten Lösungen ist jeweils unter anderem, dass:
- beim Kleben hohe Reinheitsanforderungen herrschen und lange Prozesszeiten zum Aushärten eingehalten werden müssen, wobei eine derartige Verbindung nicht zerstörungsfrei wieder lösbar ist;
- Klammern nicht zerstörungsfrei lösbar sind;
- Einschrauben aufwendig ist und es mehrere Bauteile zusätzlich erforderlich macht, die dabei grundsätzlich nicht verliersicher sind;
- das Nieten eine geringe Haltemöglichkeit durch geringe Flächen eines Nietfußes zeigt und dabei ebenfalls nicht zerstörungsfrei wieder lösbar ist und
- Stopfen oder Clips ebenfalls nicht verliersicher sind und auch ein zusätzliches Bauteil notwendig machen, wobei eine sicher fixierende Montage sich ebenfalls schwierig gestalten kann.

In einem Lösungsansatz sind in der Vergangenheit gerade bei der Herstellung von Silikonkautschuk-Formteilen integrierte Arretierungskomponenten an dem Formteil angeformt worden. Hiermit war das Problem der Verliersicherheit soweit gelöst, und es waren auch keine zusätzlichen Bauteile mehr erforderlich. Jedoch macht das Vorsehen von Arretierungskomponenten an einem Formteil Beschränkungen hinsichtlich der konstruktiven Ausgestaltung notwendig, da derartige Arretierungskomponenten nach Abschluss des thermoplastischen Formgebungsverfahrens nur im Zuge einer Zwangsentformung aus einem jeweiligen Werkzeug entnommen werden können. Um die Arretierungskomponenten in diesem Vorgang nicht zu beschädigen, können entsprechende Grenzen beim Design der Arretierungskomponenten nicht überschritten werden, oder ein Werkzeug wird z.B. aufgrund von dann für eine Entnahme des erstarrten Formteils benötigte bewegliche Schieberelement o.ä. in unvertretbarer Weise verteuert.

Es besteht daher für die vorliegende Erfindung die Aufgabe, eine Anordnung zur Befestigung eines Formteils aus einem thermoplastischen Material an oder mit mindestens einem anderen bzw. weiteren Bauteil zu schaffen, das verliersicher und zudem auch zerstörungsfrei von einem Werkzeug lösbar bzw. entformbar ist.

Diese Aufgabe wird durch die Merkmale des vorliegenden Anspruchs 1 dadurch gelöst, dass eine ein flächiges Formteil aus einem thermoplastischen Material umfassende Anordnung, an oder mit mindestens einem anderen bzw. weiteren Bauteil durch rastende oder klemmende Fixierung eines Befestigungselements in mindestens einer fluchtenden Öffnung des Formteils und des mindestens einen weiteren Bauteils befestigt ist, wobei das Befestigungselement über ein Anbindungsteil mit dem Formteil einstückig und flexibel verbunden ist. Damit ermöglicht das Anbindungsteil ein zur Fixierung erforderliches Maß an Flexibilität im Sinne einer ausreichenden Beweglichkeit des Befestigungselements auf die entsprechende Öffnung in dem Formteil zu und durch diese Öffnung hindurch. Die einfach und sicher durchführbare Fixierung eines flächigen Formteils an einem anderen Bauteil im Wesentlichen unter Kraftschluss ist ein wichtiger Unterschied im Vergleich zu Einweg-Siegeln oder Mitteln zur Bündelung von Waren, wie u.a. durch US 3,265,426 A, US 5,685,048 A oder WO 2009/043886 A1 offenbart.

Vorteilhafte Weiterbildungen der Erfindung sind Gegenstand der jeweiligen Unteransprüche. Demnach ist in einer Ausführungsform der Erfindung das Anbindungsteil an einem Randbereich des Formteils angeordnet und das Anbindungsteil ist in seiner Länge derart bemessen, dass das Befestigungselement in der Öffnung des Formteils fixierbar ist, nämlich in einer diesem jeweiligen Befestigungselement zugeordneten Öffnung.

In einer besonders bevorzugten Ausführungsform der Erfindung ist eine Symmetrieachse oder Symmetrieebene des Befestigungselements in einer Werkzeugtrennebene des thermoplastischen Formteils liegend angeordnet. Bei einer bekannten Herstellung liegt unter fester Anbindung des Befestigungselements an das betreffende thermoplastische Formteil eine Positionierung der Symmetrieachse stets in einer Öffnungsrichtung eines Werkzeugs. Um bei dieser Konstellation eine Entformung eines Spritzgießteils aus einem entsprechenden Werkzeug möglich zu machen, müssen u.a. Hinterschnitte oder sonstige Spreiz- und/oder Rastmittel entsprechend abgeschwächt werden, was Probleme bei der Entformung eines fertigen Bauteils zwar verringert, andererseits aber auch ein Fixierungsvermögen eines betreffenden Befestigungselements und damit auch dessen Dauerzuverlässigkeit erheblich mindert.

Darüber hinaus wird bevorzugt, dass eine Symmetrieebene des Anbindungsteils in einer Werkzeugtrennebene des Formteils liegt. Hiermit wird eine vergleichsweise einfache Formgestaltung eines Herstellungswerkzeugs für thermoplastische Formteile mit einem daran einstückig angeordneten Befestigungselement und einem Anbindungsteil geschaffen. Eine weitgehende Formfreiheit gerade im Bereich des Befestigungselements ist damit sichergestellt, ohne dass nach Abschluss eines Fertigungsvorgangs Maßnahmen z.B. der Zwangsentformung durchgeführt oder in dem Werkzeug selber zusätzliche konstruktive Maßnahmen ergriffen werden müssten. Das vorstehend Gesagte gilt grundsätzlich auch für die Auslegung des Befestigungselements.

Zur Herstellung einer besonders guten Flexibilität des Anbindungsmittels wird bevorzugt, dass das Anbindungsmittel S- oder wellenförmig ausgebildet ist. Damit kann eine entsprechende Materiallänge auf engstem Raum und unter Vermeidung größerer Zug- oder Biegespannung an dem Anbindungsmittel beim Einsatz realisiert werden.

In einer besonders bevorzugten Ausführungsform weist das Befestigungselement selber eine Form nach Art eines Stopfens oder Clips auf. Hier ist dem Fachmann bekannt, dass ein Stopfen mindestens ein Rast- oder Arretierungsmittel aufweist, das z.B. als in oder in Einführrichtung gesehen hinter einer Einführöffnung weitender oder abspreizender Arm oder eine entsprechend elastisch verformbare Schulter mit einem Hinterschnitt ausgebildet ist. Dem gegenüber liegend angeordnet ist eine regelmäßig über einen Schaft mit dem Rast- oder Arretierungsmittel verbundene Abschlussschulter vorgesehen, die z.B. in einen Kopfteil des Stopfens hin ausläuft. Eine derartige Vorrichtung weist in der Regel mindestens eine Symmetrieebene auf, wenn sie nicht sogar um eine Mittelachse herum symmetrisch aufgebaut ist.

Vorzugsweise weist das Befestigungselement an einem freien Endbereich eine Führungsnase auf. Diese Führungsnase kann in die Rast- oder Arretierungsmittel übergehend angeformt sein und dient als Einführ- und Positionierungshilfe beim Einsetzen eines erfindungsgemäßen Elements durch fluchtende Öffnungen von mindestens zwei Elementen hindurch, von denen nur das eine das entsprechende thermoplastische Formteil ist, dessen integrales Bestandteil das Befestigungselement mit dem Anbindungsteil ist.

Die Führungsnase ist in einem Ausführungsbeispiel der Erfindung als zylindrischer, kegel- oder kegelstumpfförmiger Abschnitt ausgebildet. Es ist bevorzugt, dass die Führungsnase einen Durchmesser aufweist, der geringer als eine freie Weite der entsprechenden Öffnungen ist.

Weiter ist in einer Ausführungsform der Erfindung bevorzugt, dass das Befestigungselement an einem freien Endbereich der Führungsnase länger als eine Dicke des Formteils und des mindestens einen weiteren Bauteils im Bereich der fluchtenden Öffnungen ist. Damit kann also ein entsprechend ausgebildetes Befestigungselement durch die Führungsnase einerseits relativ zu den Öffnungen positioniert und durch diese soweit hindurchgeführt werden, dass das Befestigungselement über seine Führungsnase selber gegen den Widerstand der mindestens einen Arretierungs- und Fixierungseinrichtung in entsprechender Weise durch die Öffnungen hindurch gezogen werden kann, bis eine sichere Fixierung erfolgt ist.

In einer bevorzugten Ausführungsform der Erfindung ist eine um die Öffnung herum vorgesehene Aussparung in Anpassung auf den Kopfteil derart in dem Formteil ausgebildet, dass der Kopfteil des Befestigungselements bei sichernder Verrastung des Befestigungselements in der Öffnung in die Aussparung im Wesentlichen bündig mit einer Oberfläche des Formteils abschließend angeordnet ist. Damit ist eine einfache und dennoch sichere optische Kontrolle der Fixierungsstellen auf korrekte Verrastung möglich.

Besonders vorteilhaft ist die Ausbildung eines Formteils zusammen mit dem Anbindungsteil und mindestens einem Befestigungselement aus einem Silikon oder Silikonkautschuk. Hier sind dem Fachmann diverse Möglichkeiten einer Formgebung im Rahmen thermoplastischer Herstellungsprozesse hinlänglich bekannt. Auch ist dieses Verfahren hinsichtlich der beim Zusammenbau bzw. der Fixierung der Befestigungselemente und den damit einhergehenden mechanischen Belastungen, aber auch thermischer Einflüsse, Umwelteinflüsse und den sonstigen Arbeitsbedingung im Bereich eines Kraftfahrzeugs und hier insbesondere im Motorraum ausreichend bekannt. Die vorstehend angegebenen Materialien haben hier ihre Einsatzfähigkeit auch unter thermischen schwierigeren Umgebungsbedingungen mit Umgebungstemperaturen von sogar mehr als 200°C ausreichend unter Beweis gestellt.

Nachfolgend werden unter Bezugnahme auf die beigefügten Figuren der Zeichnung weitere Vorteile und vorteilhafte Eigenschaften erfindungsgemäßer Ausführungsbeispiele näher beschrieben. In der Zeichnung zeigen in schematischer Darstellung:
- Figur 1a:: einen Schnitt durch eine prinzipielle Seitenansicht eines thermoplastischen Formteils mit daran einstückig über ein Anbindungsteil angebundenes Befestigungselement unter Andeutung einer Werkzeugtrennebene;
- Figur 1b:: die Anordnung gemäß Figur 1a unter Andeutung eines grundsätzlichen Aufbaus einer Anordnung in einem Einbaufall;
- Figuren 2a bis 2c:: Ausschnitt eines Bauteils mit einem Befestigungselement in drei Ansichten;
- Figur 3:: eine Einbausituation mit Fixierung einer SilikonDichtlippe auf einem Metallblech unter Verwendung einer weiteren Ausführungsform eines erfindungsgemäßen thermoplastischen Formteils;
- Figur 4:: eine dreidimensionale Darstellung einer weiteren Bauform eines erfindungsgemäßen Formteils unter Verwendung dreier Befestigungselemente zur Fixierung an einem Abschirmblech;
- Figur 5:: eine Abwandlung zu der Ausführungsform von Figur 1b;
- Figur 6:: eine Abwandlung zu den Ausführungsformen gemäß Figur 3 und 5 und
- Figur 7:: eine Schnittdarstellung von Figur 6 als Abwandlung zu den Ausführungsformen gemäß Figur 1b und 5.

Über die verschiedenen Bauformen und Abbildungen hinweg werden nachfolgend für gleiche Bauteile und Bauelemente einheitlich gleiche Bezugszeichen verwendet werden. Ohne Beschränkung des Einsatzfelds für Ausführungsformen der vorliegenden Erfindung wird nachfolgend lediglich auf eine Verwendung in einem Kraftfahrzeug eingegangen werden. Hier ist die Fixierung einer Dichtlippe zum Verschließen eines Luftspalts zwischen einem Unterbodenhitzeschild und einem angrenzenden Unterboden ein Einsatzfeld für Formteile aus Silikonkautschuk.

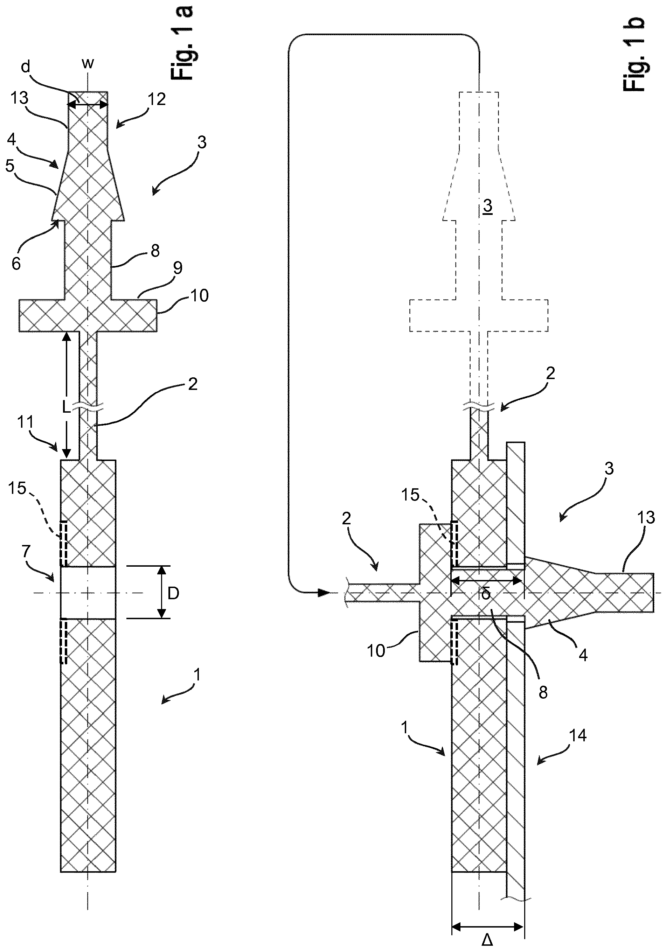

Die Abbildung von Figur 1a zeigt einen Schnitt durch eine Seitenansicht eines thermoplastischen Formteils 1 mit einem daran einstückig über ein Anbindungsteil 2 angebundenen Befestigungselement 3. Hier ist das Befestigungselement 3 als sog. Stopfen ausgeführt. Bekanntermaßen weist ein Stopfen Rast- oder Arretierungsmittel 4 in Form mindestens eines Arms oder im vorliegenden Fall eine entsprechend elastisch verformbare Schulter 5 mit einem Hinterschnitt 6 auf, die sich in oder hinter einer Einführöffnung 7 wieder aufweiten und/oder spreizen. Dem gegenüber liegend angeordnet ist eine über einen Schaft 8 mit dem Rast- oder Arretierungsmittel 4 verbundene Abschlussschulter 9 vorgesehen, die in einen Kopfteil 10 des Stopfens 3 hin ausläuft.

Eine derartige Vorrichtung weist in der Regel mindestens eine Symmetrieebene auf. In dem dargestellten Ausführungsbeispiel ist der Stopfen 3 sogar um eine Mittelachse herum symmetrisch aufgebaut. Im Gegensatz zu bekannten Herstellungsverfahren unter fester Anbindung eines Befestigungselements an das betreffende thermoplastische Formteil mit Positionierung der Symmetrieachse des Befestigungselements stets in einer Öffnungsrichtung eines Werkzeugs, liegt hier eine Symmetrieebene oder gar Symmetrieachse des Befestigungselements 3 in einer Werkzeugtrennebene W des thermoplastischen Formteils 1 und damit i.d.R. senkrecht zu einer Öffnungsrichtung eines Werkzeugs. Nach dem Stand der Technik ist beim Entnehmen des fertigen thermoplastischen Formteils 1 eine Zwangsentformung mindestens des Befestigungselements 3 notwendig. In Anpassung auf die Notwendigkeit einer Zwangsentformung ohne Beschädigung des Bauteils sind u.a. Hinterschnitte 6 oder sonstige Spreiz- und/oder Rastmittel 4 oder eine verformbare Schulter 5 des Befestigungselements 3 entsprechend abgeschwächt ausgebildet.

Derartige Probleme treten in dem vorliegenden Ausführungsbeispiel durch die Verlagerung der Symmetrieebene in die Werkzeugtrennebene W prinzipiell nicht auf. Damit kann ein maximales Fixierungsvermögen des Befestigungselements 3 realisiert und damit auch dessen Dauerzuverlässigkeit hinsichtlich der Fixierung des Formteils 1 gegenüber einer nach dem Stand der Technik bekannten Lösung erheblich gesteigert werden.

Anhand der in dieser Skizze eingezeichneten Werkzeugtrennebene W ist zudem erkennbar, dass auch eine Symmetrieebene des Anbindungsteils 2 in der Werkzeugtrennebene W liegt. Das Anbindungsteil 2 schließt einstückig an einen Randbereich 11 des Formteils 1 an. Die Skizze von Figur 1b zeigt, dass in Abhängigkeit von einem jeweiligen Anwendungsfall das an dem Anbindungsteil 2 angebundene Befestigungselement 3 schon eine gewisse Wegstrecke bewegt werden muss, um durch die Einführöffnung 7 hindurch fixiert zu werden. Das Anbindungsteil 2 muss also eine ausreichende Länge L bei vertretbarer Eigensteifigkeit aufweisen. Dazu ist das relativ schlank ausgeführte Anbindungsmittel 2 in hier nicht erkennbarer Weise z.B. mäandernd oder S- oder wellenförmig ausgebildet. Damit kann eine entsprechende Materiallänge unter Vermeidung größerer Zug- oder Biegespannung beim Einsatz realisiert werden. Zudem ist das Anbindungsteil 2 in der Trennebene W verlaufend angeordnet, beansprucht dadurch innerhalb eines Spritzgießwerkzeugs nur wenig Bauraum und ist ebenfalls frei und leicht aus dem Werkzeug entformbar.

Schließlich weist das Befestigungselement 3 an einem freien Endbereich 12 auch noch eine Führungsnase 13 auf. Die Führungsnase 13 ist als zylindrischer Abschnitt mit Übergang in das kegelstumpfförmige Rast- oder Arretierungsmittel 4 ausgebildet. So weist die Führungsnase 13 zudem einen Durchmesser D auf, der geringer als ein freier Durchmesser D der Öffnung 7 ist. Zudem ist bevorzugt, dass die Führungsnase 13 an dem freien Endbereich 12 des Befestigungselements 3 länger ist als eine Dicke Δ des Formteils 1 und des mindestens einen weiteren Bauteils 14 im Bereich der fluchtenden Öffnungen 7. Damit kann das Befestigungselement 3 unter Führung durch die Führungsnase 13 durch die Öffnung 7 des Formteils und eine dazu fluchtend angeordnete Öffnung in dem weiteren Bauteil 14 eingeführt werden. Zur Fixierung kann das Befestigungselement 3 so von Hand an der Führungsnase 13 gezogen und/oder zugleich am Kopfteil 10 des Stopfens 3 gedrückt werden.

Schließlich ist vorgesehen, dass die Dicke Δ des Formteils 1 und des mindestens einen weiteren Bauteils 14 im Bereich der fluchtenden Öffnungen 7 einer Länge δ des Schafts 8 entspricht. Nur in gestrichelter Linie angedeutet ist die Möglichkeit, den Kopfteil 10 des Stopfens 3 mindestens teilweise an dem Formteil zu versenken. Hierzu kann beispielsweise eine tellerförmige Aussparung 15 um die Einführöffnung 7 des Formteils 1 herum vorgesehen sein, in die der Kopfteil 10 mindestens teilweise hineingreift. Hierdurch kann erforderlichenfalls Bauraum jenseits einer Oberfläche O des Formteils 1 eingespart werden. Falls in der in den Figuren 1a und 1b angedeuteten Weise eine Aussparung 15 um die Öffnung 7 z.B. des Formteils 1 herum vorgesehen ist, so kann die Länge δ des Schafts 8 verringert werden.

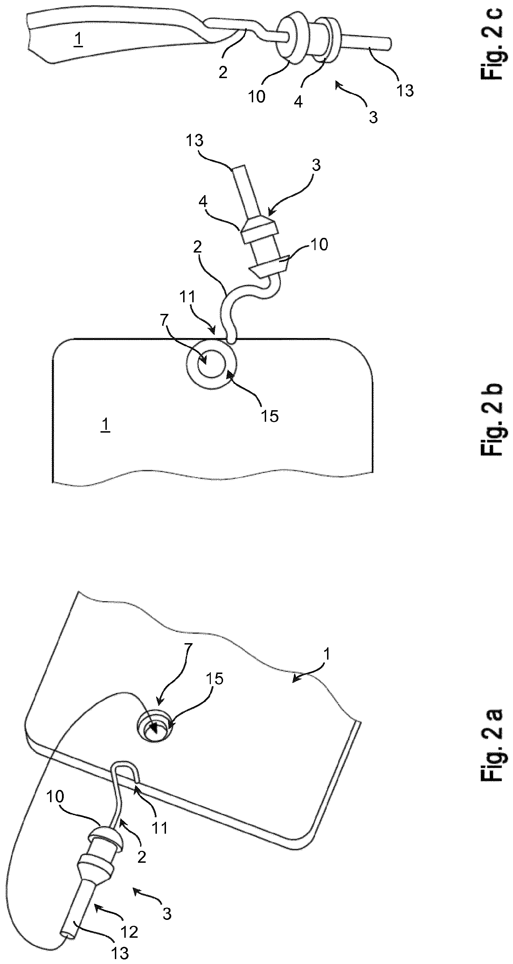

Die Folge der Figuren 2a bis 2c zeigt einen Ausschnitt eines Formteils 1 mit über ein Anbindungsteil 2 einstückig angebundenem Befestigungselement 3 in drei Ansichten. Dabei stellt Figur 2a eine dreidimensionale Ansicht des Formteils 1 mit dem an dem Randbereich 11 über das Anbindungsteil 2 einstückig angebundenen Stopfen 3 dar. Ein Pfeil deutet an, wie das hier als Stopfen ausgeführte Befestigungselement 3 über die Führungsnase 13 an seinem freien Endbereich 12 in die Öffnung 7 des Formteils 1 zum Einbau eingeführt wird, um eine zerstörungsfrei lösbare formschlüssige Verbindungsmöglichkeit eines Silikonkautschuk-Formteils 1 mit mindestens einem anderen beliebigen Bauteil zu realisieren. Auf Art und Form derartiger anderer Bauteils wird nachfolgend noch anhand von Beispielen aus dem Kfz-Bereich eingegangen werden. Dabei liegt eine Besonderheit darin, dass die für die formschlüssige Verbindung notwendigen Rast- und/oder Arretierungsmittel 4 als integrale Bestandteile des Silikonkautschuk-Forms 1 ausgebildet und mit diesem in einem nur einschrittigen Herstellungsprozess unverlierbar verbunden sind. In diesem Sinne macht die Draufsicht von Figur 2b hierzu deutlich, dass das Anbindungsteil 2 im Randbereich 11 des Formteils 1 leicht oberhalb einer Kante angesetzt ist, wie schon in Figur 2a angedeutet. Eine notwenige Flexibilität der Anbindung des Stopfens 3 wird durch eine S- oder Wellenform des relativ dünn bzw. schlank und damit gut beweglichen Anbindungsteils 2 an dem Randbereich 11 des Formteils 1 realisiert. Dazu beeinflusst dieses Vorgehen die eigentliche Form des Formteils 1 in nur vernachlässigbarer Weise, wobei auch nur sehr geringer Bauraum innerhalb eines Werkzeugs benötigt wird. Der durch das Anbindungsteil 2 und daran einstückig angebundenen Stopfen 3 gebildete Zusatz zu dem eigentlichen Formteil 1 weist mindestens eine Symmetrieebene auf, die parallel zu einer Öffnungsrichtung eines Werkzeugs im Spritzgießprozess positioniert wird, und zwar vorteilhafterweise in einer Werkzeugtrennebene. So wird weitgehend jede Verkomplizierung der Fertigung vermieden, insbesondere die Notwendigkeit einer Zwangsentformung. Zudem ist eine hier dargestellte Rotationssymmetrie des Befestigungselements 3 als Stopfen nicht erforderlich, das Befestigungselement 3 kann auch nach Art eines Clips mit einem oder zwei Rastarmen als Rast- und/oder Arretierungsmittel 4 ausgerüstet sein, solange es mit dem Anbindungsteil 2 zusammen eine gemeinsame Symmetrieebene bildet.

Figur 2c verdeutlicht diese Position noch als Seitenansicht. Es ist also auch in diesem Ausführungsbeispiel sichergestellt, dass eine in dem Anbindungsteil 2 und dem Befestigungselement 3 vorhandene Symmetrieebene in einer hier nicht weiter dargestellten Werkzeugtrennebene w liegt, um eine einfache Entformbarkeit sicherzustellen.

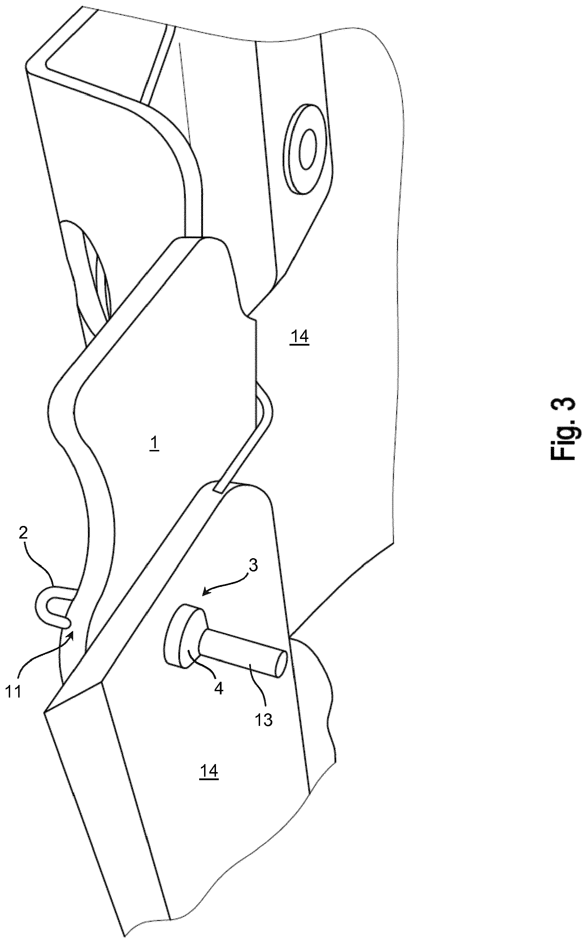

Figur 3 stellt eine Einbausituation dar, in der eine Silikon-Dichtlippe 14 auf einem Metallblech 14 aufgesteckt ist. Gegenüber der hier dargestellten Ausführungsform eines Formteils 1 stellen beide Elemente weitere Bauteile 14 im Sinne der Erfindung dar. Unter Verwendung der dargestellten Ausführungsform eines erfindungsgemäßen thermoplastischen Formteils 1 werden Dichtlippe 14 und Metallblech 14 überdeckt, wobei eine Fixierung durch ein Befestigungselement 3 insbesondere als Klapperschutz vorgesehen ist.

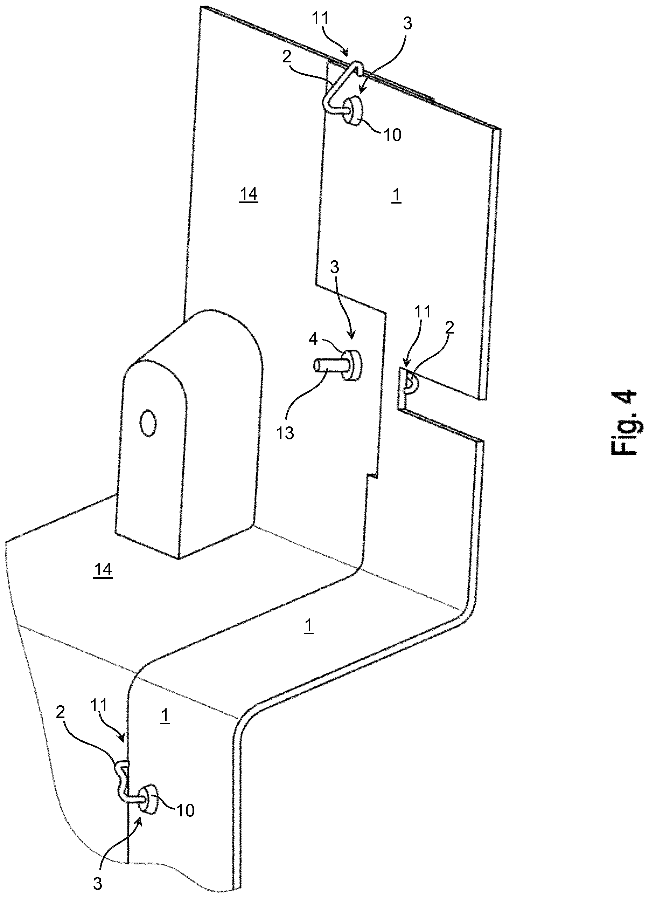

Figur 4 ist schließlich eine dreidimensionale Darstellung einer weiteren Bauform eines erfindungsgemäßen Formteils 1. In diesem Anwendungsfall wird ein Formteil 1 unter Verwendung dreier Befestigungselemente 3 an einem Abschirmblech 14 fixiert. Die Befestigungselemente 3 sind dabei in beiden grundsätzlich möglichen Richtungen durch Öffnungen 7 hindurch fixiert. Auffällig ist an diesem Ausführungsbeispiel, dass ein jeweiliger Anbindungsteil 2 nicht nur als Fließkanal bei einer einschrittigen Herstellung als Spritzgießteil und nachfolgend als Verliersicherung und Montagehilfe dient. Darüber hinaus ist ein im Einsatz gebildeter bogenförmiger Verlauf der Anbindungsteile 2 auch so auffällig, dass er als optisches Kontrollorgan bei einer Sichtprüfung einer Ausführung bzw. Belegung der vorgesehenen Fixierungsstellen nutzbar ist.

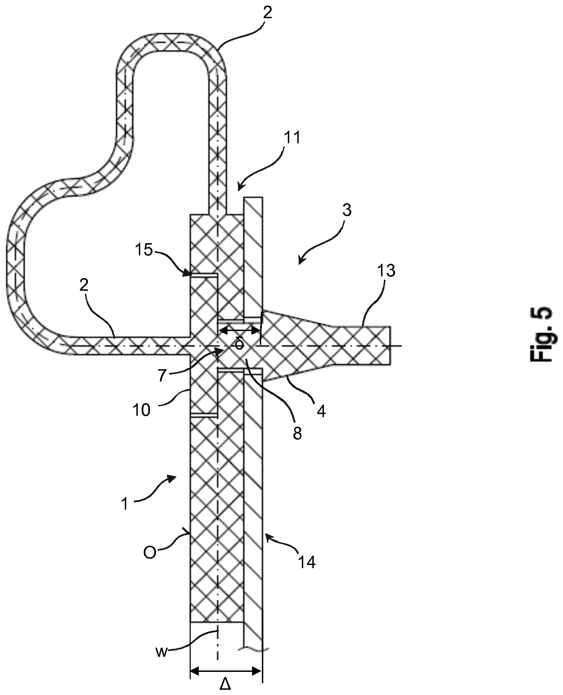

Figur 5 zeigt eine Abwandlung zu der Ausführungsform von Figur 1b. Hier ist die um die Öffnung 7 herum vorgesehene Aussparung 15 so tief in das Formteil 1 hinein verlaufend ausgeführt worden, dass der Kopfteil 10 des Befestigungselements 3 hier mit einer Oberfläche O des Formteils 1 bündig abschließend einführbar ist. In einer schon in der Beschreibung zu den Abbildungen der Figuren 1a und 1b angedeuteten Weise ist die Aussparung 15 um die Öffnung 7 des Formteils 1 herum nicht nur einer äußeren Form des Kopfteils 10 des Befestigungselements 3 entsprechend anzupassen, es ist auch die Länge δ des Schafts 8 entsprechend so zu bemessen, dass bei bündigem Eintauchen des Kopfteils 10 in die Aussparung 15 auch eine sichere Verrastung des Befestigungselements 3 in oder an der oder durch die Öffnung 7 des Formteils 1 hindurch sichergestellt ist. Durch ein definiertes "Eintauchen" des Kopfteils 10 des Befestigungselements 3 in die Aussparung 15 um die Öffnung 7 kann schnell und einfach ein optisch kontrollierbarer Nachweis für eine korrekt vollzogene Fixierung des Befestigungselements 3 geführt werden.

Im Fall mehrerer, eng beieinander liegender Befestigungselemente 3 können als Weiterbildung in einem nicht weiter zeichnerisch dargestellten Ausführungsbeispiel der Erfindung jeweils zugehörige Öffnungen 7 des Formteils 1 auch durch das Zusammenspiel von Kopfteil 10 und Aussparung 15 quasi dadurch codiert werden, dass z.B. die Aussparungen 15 mit den jeweils dazu passenden Kopfteilen 10 als passendes Paar voneinander abweichende Durchmesser und/oder abweichende Außenformen aufweisen. So sind einfach neben Kreisen auch Ovale, Drei-, Vier- und Mehrecke sowie andere mindestens eine Symmetrieebene aufweisende geometrische Formen ausführbar. Dann ist auch schon eine Zuordnung optisch schnell und zweifelsfrei möglich, sofern diese Zuordnung nicht durch Lage und Länge der jeweiligen Anbindungsteile 2 festlegbar ist und/oder eine Verdrehsicherung oder ähnliche zusätzliche Eigenschaften erwünscht sind.

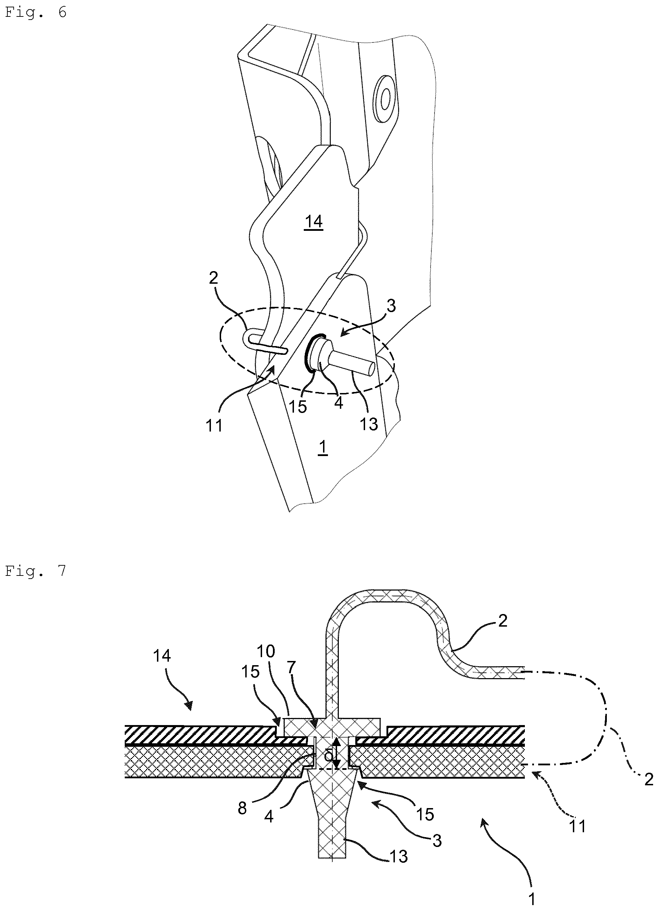

Die Abbildung von Figur 6 zeigt einen gegenüber der Ausführungsform von Figur 3 dualen Fall. Hierbei haben nun das Formteil 1 und das mindestens eine weitere Bauteil 14 in gewisser Weise die Plätze getauscht. Damit wird das Befestigungselement 3 zuerst durch eine nicht weiter erkennbare Ausnehmung in dem Bauteil 14 hindurchgeführt, um dann mit seinem Rastmittel 4 in einer tellerförmigen Ausnehmung 15 des Formteils 1 zu arretieren.

Figur 7 zeigt schließlich eine Abwandlung zu den Ausführungsformen gemäß Figur 1b und 5, bei der nun ein Schnitt durch eine Anordnung gemäß Figur 6 dargestellt ist. Ein Kopfteil 10 des Befestigungselements 3 greift nun seinerseits in eine tellerförmige Vertiefung 15 ein, wie auch das Rastmittel 4 sich in einer tellerförmigen Ausnehmung 15 fixiert. Die tellerförmige Vertiefung 15 zur Anlage des Kopfteils 10 ist aber nun an dem weiteren Bauteil 14 vorgesehen, wohingegen die tellerförmige Vertiefung 15 zur Fixierung des Rastmittels 4 des Kopfteils 10 des Befestigungselements 3 nun an dem Formteil 1 vorgesehen ist. Über eine Zugspannung im Schaft 8 werden die flächigen Elemente 1 und 14 weiterhin kraftschlüssig aneinander fixiert.

Insgesamt können also durch Ausführungsformen der vorliegenden Erfindung folgende Vorteile realisiert werden:
- Keine zusätzlichen Bauteile zur Verbindung notwendig;
- Die Verbindung ist zerstörungsfrei beliebig oft lösbar;
- Eine Montage ist auch in einem Servicefall einfach und grundsätzlich ohne Werkzeuge von Hand durchführbar;
- Eine Zwangsentformung aus einem Werkzeug ist bei der Herstellung nicht erforderlich, was u.a. eine deutliche Senkung der Werkzeugkosten und eine Stärkung eines Rast- und/oder Arretierungsvermögens des Befestigungselements 3 realisierbar macht;
- Eine schnell und einfach durchführbare optische Kontrolle der vollständigen Belegung aller Fixierungsstellen an einem Formteil 1 und/oder einer korrekten Fixierung der jeweiligen Befestigungselemente in den zugehörigen Ausnehmungen ist leicht möglich.

Eine Anwendung einer erfindungsgemäßen Vorrichtung außerhalb des Kraftfahrzeug-Bereichs ist z.B. als Schließ- oder Verschlusselement insbesondere an flächigen und beliebig dreidimensional geformten Form- oder Folienteilen in einer für den Fachmann offensichtlichen Art und Weise jederzeit möglich. Auch sind andere Einsatzfelder unter Anwendung sonstiger mindestens teilplastischer Materialien wie PVC, PP, PA oder PE grundsätzlich nicht ausgeschlossen.

### Bezugszeichenliste

- 1: Formteil
- 2: Anbindungsteil
- 3: Befestigungselement
- 4: Rast- oder Arretierungsmittel
- 5: elastisch verformbare Schulter
- 6: Hinterschnitt
- 7: Ausnehmung / Einführöffnung / Öffnung
- 8: Schaft
- 9: Abschlussschulter
- 10: Kopfteil
- 11: Randbereich des Formteils 1
- 12: freier Endbereich
- 13: Führungsnase
- 14: mindestens ein weiteres Bauteil
- 15: Vertiefung / tellerförmige Aussparung um die Einführöffnung 7 des Formteils 1 herum

- W: Werkzeugtrennebene
- d: Durchmesser der Führungsnase 13
- D: freier Durchmesser
- L: Länge des Anbindungsteils 2
- Δ: Dicke der mindestens zwei Schichten (Formteil 1 und mind. eines weiteren Bauteils 14)
- δ: Länge des Schafts 8
- L: Länge des Anbindungsteils 2
- O: Oberfläche des Formteils 1

## Patentansprüche

1. Anordnung umfassend ein flächiges Formteil (1) aus einem thermoplastischen Material,
befestigt an oder mit mindestens einem anderen bzw. weiteren Bauteil (14)
durch rastende oder klemmende Fixierung eines Befestigungselements (3)
in mindestens einer fluchtenden Öffnung (7) des Formteils (1) und des mindestens einen weiteren Bauteils (14), wobei das Befestigungselement (3) über ein Anbindungsteil (2) mit dem Formteil (1) einstückig und flexibel verbunden ist.

2. Anordnung nach dem vorhergehenden Anspruch, **dadurch gekennzeichnet, dass** der Anbindungsteil (2) an einem Randbereich (11) des Formteils (1) angeordnet und der Anbindungsteil (2) in seiner Länge derart bemessen ist, dass das Befestigungselement (3) in der Öffnung (7) fixierbar ist.

3. Anordnung nach einem der vorhergehenden Ansprüche, **dadurch gekennzeichnet, dass** eine Symmetrieachse oder Symmetrieebene des Befestigungselements (3) in einer Werkzeugtrennebene (W) des Formteils (1) liegen.

4. Anordnung nach einem der vorhergehenden Ansprüche, **dadurch gekennzeichnet, dass** eine Symmetrieebene des Anbindungsteils (2) in einer Werkzeugtrennebene (W) des Formteils (1) liegt.

5. Anordnung nach einem der vorhergehenden Ansprüche, **dadurch gekennzeichnet, dass** der Anbindungsteil (2) S- oder wellenförmig ausgebildet ist.

6. Anordnung nach einem der vorhergehenden Ansprüche, **dadurch gekennzeichnet, dass** das Befestigungselement (3) nach Art eines Stopfens ausgebildet ist.

7. Anordnung nach einem der vorhergehenden Ansprüche, **dadurch gekennzeichnet, dass** das Befestigungselement (3) an einem freien Endbereich (12) eine Führungsnase (13) aufweist.

8. Anordnung nach dem vorhergehenden Anspruch, **dadurch gekennzeichnet, dass** die Führungsnase (13)
als zylindrischer, kegel- oder kegelstumpfförmiger Abschnitt ausgebildet ist und einen Durchmesser aufweist, der geringer als eine freie Weite der Öffnung (7) ist, und/oder länger als eine Dicke (d) des Formteils (1) und des mindestens einen weiteren Bauteils (14) im Bereich der fluchtenden Öffnung (7) ist.

9. Anordnung nach einem der vorhergehenden Ansprüche, **dadurch gekennzeichnet, dass** eine um die Öffnung (7) herum vorgesehene Aussparung (15) in Anpassung auf einen Kopfteil (10) derart in dem Formteil (1) ausgebildet ist, dass der Kopfteil (10) des Befestigungselements (3) bei sichernder Verrastung des Befestigungselements (3) in der Öffnung (7) in die Aussparung (15) im Wesentlichen bündig mit einer Oberfläche (O) des Formteils (1) abschließend angeordnet ist.

10. Anordnung nach einem der vorhergehenden Ansprüche, **dadurch gekennzeichnet, dass** das Formteil (1), der Anbindungsteil (2) und das Befestigungselement (3) aus einem Silikon oder Silikonkautschuk gebildet sind.

## Claims

1. An assembly comprising a flat moulded part (1) made of a thermoplastic material,
fastened to or with at least one other or further component (14)
by latching or clamping fixation of a fastening element (3)
in at least one aligned opening (7) of the moulded part (1) and of the at least one further component (14), where the fastening element (3) is integrally and flexibly connected to the moulded part (1) via a connecting part (2).

2. Assembly according to the preceding claim, **characterised in that** the connecting part (2) is arranged at an edge region (11) of the moulded part (1) and the connecting part (2) is dimensioned in its length in such a way that the fastening element (3) can be fixed in the opening (7).

3. Assembly according to one of the preceding claims, **characterized in that** an axis of symmetry or plane of symmetry of the fastening element (3) lies in a mould parting plane (W) of the moulded part (1).

4. Assembly according to one of the preceding claims, **characterized in that** a plane of symmetry of the connecting part (2) lies in a mould parting plane (W) of the moulded part (1).

5. Assembly according to one of the preceding claims, **characterized in that** the connecting part (2) is S-shaped or wave-shaped.

6. Assembly according to one of the preceding claims, **characterized in that** the fastening element (3) is designed in the manner of a plug.

7. Assembly according to one of the preceding claims, **characterized in that** the fastening element (3) has a guide nose (13) at a free end region (12).

8. Assembly according to the preceding claim, **characterized in that** the guide lug (13)
is formed as a cylindrical, conical or frustoconical section and has a diameter which is smaller than a free width of the opening (7), and/or
is longer than a thickness (d) of the shaped part (1) and of the at least one further component (14) in the region of the aligned opening (7).

9. Assembly according to one of the preceding claims, **characterized in that** a recess (15) provided around the opening (7) is formed in the moulding (1) in adaptation to a head part (10) in such a way that the head part (10) of the fastening element (3) is arranged substantially flush with a surface (O) of the moulding (1) when the fastening element (3) is securely latched in the opening (7) into the recess (15).

10. Assembly according to one of the preceding claims, **characterized in that** the moulded part (1), the connecting part (2) and the fastening element (3) are formed from a silicone or silicone rubber.

## Revendications

1. Agencement comprenant une pièce moulée plate (1) en matière thermoplastique,
fixé à ou avec au moins un autre composant ou un autre composant (14)
par fixation par encliquetage ou serrage d'un élément de fixation (3)
dans au moins une ouverture alignée (7) de la pièce moulée (1) et du au moins un autre composant (14),
dans lequel
l'élément de fixation (3) est relié de manière intégrale et flexible à une pièce de liaison (2) avec la pièce moulée (1).

2. Agencement selon la revendication précédente, **caractérisé en ce que** la pièce de liaison (2) est située dans une zone de bord (11) de la pièce moulée (1) et la pièce de liaison (2) est dimensionnée dans sa longueur de telle sorte que l'élément de fixation (3) puisse être fixé dans l'ouverture (7).

3. Agencement selon l'une des revendications précédentes, **caractérisé en ce qu'**un axe de symétrie ou plan de symétrie de l'élément de fixation (3) se trouve dans un plan de séparation de moule (W) de la pièce moulée (1).

4. Agencement selon l'une des revendications précédentes, **caractérisé en ce qu'**un plan de symétrie de la pièce de liaison (2) repose dans un plan de séparation de moule (W) de la pièce moulée (1).

5. Agencement selon l'une des revendications précédentes, **caractérisé en ce que** la pièce de liaison (2) est en forme de S ou de vague.

6. Agencement selon l'une des revendications précédentes, **caractérisé en ce que** l'élément de fixation (3) est conçu comme un bouchon.

7. Agencement selon l'une des revendications précédentes, **caractérisé en ce que** l'élément de fixation (3) présente un nez de guidage (13) dans une zone d'extrémité libre (12).

8. Agencement selon la revendication précédente, **caractérisé en ce que** le nez de guidage (13)
est formée sous la forme d'une section cylindrique, conique ou tronconique et a un diamètre inférieur à une largeur libre de l'ouverture (7), et/ou
est plus longue qu'une épaisseur (d) de la pièce moulée (1) et du au moins un autre composant (14) dans la zone de l'ouverture alignée (7).

9. Agencement selon l'une des revendications précédentes, **caractérisé en ce qu'**un évidement (15) prévu autour de l'ouverture (7) est formé dans la pièce moulée (1) en adaptation à une partie de tête (10) de telle sorte que la partie de tête (10) de l'élément de fixation (3) est disposée sensiblement à fleur avec une surface (O) de la pièce moulée (1) lorsque l'élément de fixation (3) est verrouillé de manière sûre dans l'ouverture (7) à l'évidement (15).

10. Agencement selon l'une des revendications précédentes, **caractérisé en ce que** la pièce moulée (1), la pièce de liaison (2) et l'élément de fixation (3) sont réalisés en silicone ou en caoutchouc de silicone.
